# FASCICULE DE BREVET EUROPEEN

(11) **EP 3 981 618 B1**
(45) Date de publication et mention de la délivrance du brevet: **07.06.2023**
(21) Numéro de dépôt: 21199584.0
(22) Date de dépôt: 28.09.2021
(51) Int. Cl.: B60C 23/04

(54) **DISPOSITIF DE CONTROLE DE LA PRESSION D'UN PNEUMATIQUE D'UNE ROUE D'AVION**
VORRICHTUNG ZUR DRUCKKONTROLLE EINES FLUGZEUGREIFENS
DEVICE FOR CONTROLLING THE PRESSURE OF A TYRE OF AN AIRCRAFT WHEEL

(30) Priorité: 09.10.2020 FR 2010348
(43) Date de publication de la demande: 13.04.2022
(73) Titulaire: Beringer Aero, 05130 Tallard (FR)
(72) Inventeur: BERINGER, Gilbert, 05130 TALLARD (FR)
(74) Mandataire: Cabinet Laurent & Charras

(56) Documents cités:
- US-A1- 2010 238 011
- US-A1- 2011 296 907
- US-A1- 2016 129 738
- US-B1- 9 821 614

## Description

### Domaine technique

L'invention se rapporte au domaine technique des roues d'avion, et en particulier au domaine des systèmes de surveillance de la pression des pneumatiques des roues d'avion.

### Art antérieur

Afin de connaitre et de surveiller la pression à l'intérieur d'un pneumatique, il est connu des documents US2010/238011, US2016/129738, US9821614 et US2011/296907 d'utiliser des systèmes de surveillance de la pression communément appelés en anglais « Tire Pressure Monitoring System » (TPMS), ou « capteurs TPMS ».

De façon classique, ces capteurs TPMS sont montés directement sur la valve du pneumatique. Cette solution peut fonctionner pour le domaine de l'automobile, mais n'est pas adaptée au domaine de l'aviation. En effet lorsqu'un avion atterrit, la roue passe, en une fraction de seconde, d'une vitesse nulle à une vitesse importante de l'ordre de 250 km/h pour un avion de transport ou de l'ordre de 80 km/h pour un avion léger.

L'accélération est suffisamment importante pour qu'un capteur simplement monté sur la valve soit arraché par la force centrifuge correspondante. Le montage d'un capteur TPMS sur le pneumatique d'une roue d'avion n'est donc pas possible.

Les capteurs TPMS présentent parfois des orifices destinés à recevoir des vis en vue d'une fixation sur la jante de la roue qu'ils équipent. Monter un capteur TPMS sur une jante implique donc de prévoir dès sa conception qu'un capteur y sera monté, car dans le domaine de l'aviation, les jantes des roues doivent être certifiées afin de garantir leur solidité et leur durée de vie.

Il n'est donc pas envisageable de modifier des jantes existantes et y rajouter des perçages ou des taraudages afin d'y monter les capteurs TPMS.

### Exposé de l'invention

L'un des buts de l'invention est de pouvoir monter un capteur TPMS dans une roue d'avion de façon sûre, sans apporter de modification à la jante.

À cet effet, il a été mis au point un dispositif de contrôle de la pression d'un pneumatique d'une roue d'avion munie d'une jante.

Selon l'invention, le dispositif comprend :
- une coque définissant un logement débouchant ;
- un système de contrôle de la pression d'un pneumatique ;
- une bande annulaire présentant une résistance à la traction comprise entre 400 et 1500N.
Le système de contrôle de la pression est reçu dans le logement de la coque, et la bande annulaire est positionnée sur une face d'appui de la coque opposée au logement débouchant et à l'encontre de moyens de retenue transversale. Le dispositif est apte à être positionné autour de la jante pour plaquer la coque contre la jante et obturer le logement débouchant.

De cette manière, le système de contrôle de la pression est enfermé dans la coque, et la coque est maintenue plaquée contre la jante. L'ajustement entre la bande annulaire et la jante garantit le maintien en position du dispositif. La résistance mécanique de la bande garantit que le système de contrôle de la pression n'est pas arraché par la force centrifuge lors de l'atterrissage de l'avion. Lorsque la jante est en deux parties, la bande est de préférence monobloc et forme un manchon cylindrique améliorant davantage la résistance mécanique.

Selon une forme de réalisation particulière, le logement présente des moyens d'encliquetage du système de contrôle de la pression. Le montage du système s'en trouve facilité.

De préférence, la bande annulaire est en fibre de carbone. Ce choix de matériau allie une bonne résistance mécanique ainsi qu'une masse volumique faible.

Avantageusement, la bande annulaire a une épaisseur comprise entre 0,8 et 2mm ce qui permet d'atteindre les résistances mécaniques et masses souhaitées. Sa largeur est comprise entre 10 et 30 mm pour les mêmes raisons.

Dans un mode de réalisation particulier, la bande annulaire est fixée sur la coque. Cela empêche la coque de glisser le long de la bande lorsque la roue d'avion accélère fortement.

Les moyens de retenue transversale peuvent être de tout type approprié. Par exemple, le fait de fixer la bande annulaire sur la coque forme des moyens de retenue longitudinale, mais aussi transversale. De préférence, les moyens de retenue transversale se présentent sous la forme de parois latérales parallèles et en saillie de la face d'appui de la coque. Ainsi l'alignement entre la coque et la bande est assuré. Cela contribue également à ce que la coque ne sorte pas de sous la bande annulaire en utilisation. Ces moyens de retenue transversale permettent notamment de guider la coque le long de la bande annulaire si la coque est amenée à être déplacée.

Avantageusement, le dispositif comprend un contrepoids diamétralement opposé au système de contrôle de la pression de pneumatique. Ce contrepoids assure l'équilibrage dynamique du dispositif, ce qui réduit les vibrations de la roue lorsqu'elle tourne.

Dans ce mode, le contrepoids peut être maintenu par une deuxième coque, de préférence identique à la première, plaquée contre la jante par la bande annulaire. Le montage du contrepoids est facilité.

Dans le mode de réalisation préféré, la bande annulaire est monobloc et déformable à la main par appui radial, pour être insérée manuellement dans le pneumatique avant montage sur une jante en deux parties. Il n'est ainsi pas nécessaire d'utiliser d'outils tel qu'une presse pour monter le dispositif dans le pneumatique. De plus, la conception générale des roues d'avion n'offre pas assez de place pour fixer le dispositif sur la jante, puis de monter le pneumatique sur la jante. Cette disposition permet donc d'insérer le dispositif dans le pneumatique avant son montage dans la jante, en particulier lorsque celle-ci est en deux parties.

Avantageusement, le dispositif comprend également des patins disposés entre la coque et la jante et/ou entre la bande et la jante. Ces patins peuvent être adaptés en termes de matériau et/ou d'épaisseur, par exemple pour que le dispositif ne patine pas sur la jante lorsque la roue accélère brusquement pendant l'atterrissage, mais surtout pour éviter de rayer la jante.

### Brève description des dessins

[Fig.1] la figure 1 est une vue en perspective, vue de dessus, d'une roue équipée d'un dispositif selon l'invention.
[Fig. 2] la figure 2 est une vue en perspective, vue de dessous, d'une roue équipée du dispositif selon l'invention.
[Fig. 3] la figure 3 est une vue en perspective, vue de dessous, du dispositif selon l'invention.
[Fig. 4] la figure 4 est une vue en perspective d'une coque incluse dans le dispositif selon l'invention.
[Fig. 5] la figure 5 est une autre vue en perspective d'une telle coque.
[Fig. 6] la figure 6 est un éclaté vu en coupe d'une roue équipée d'un dispositif selon l'invention.

### Description détaillée de l'invention

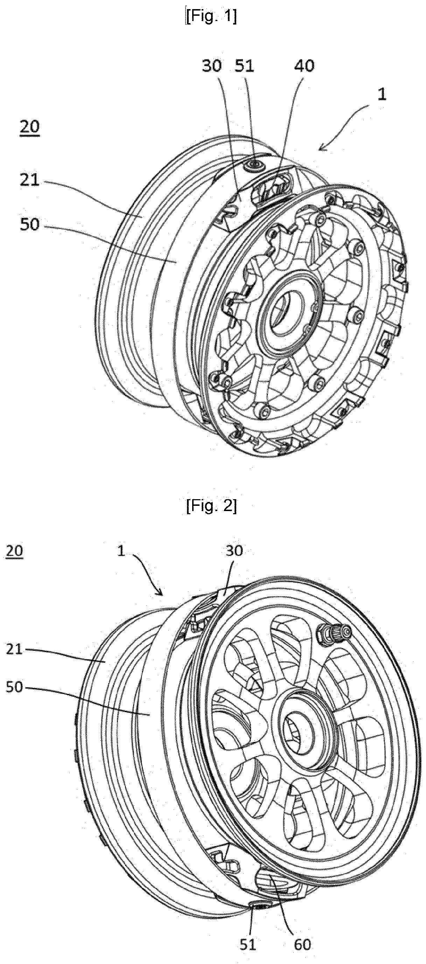

La figure 1 illustre une roue (20) équipée d'un dispositif (1) selon l'invention, qui comprend une coque (30) recevant par le dessous un système (40) de contrôle de la pression du pneumatique de la roue d'avion (20), notamment un capteur TPMS. Pour faciliter la lecture des figures, le pneumatique de la roue (20) n'est pas représenté.

La coque (30) retenant le système (40) de contrôle de la pression est maintenue sur la jante (21) au moyen d'une bande annulaire (50) qui fait le tour de la jante (21) et qui serre la coque (30) contre la jante (21).

En adaptant les dimensions de la bande (50) et donc son ajustement ou son serrage sur la jante (21), il est ainsi possible d'obtenir un dispositif (1) de contrôle de la pression du pneumatique sans modifier la jante (21). Cela permet donc de monter le dispositif (1) sur n'importe que type de roue (20) d'avion sans modification de celle-ci.

La bande annulaire (50) est avantageusement réalisée en fibres de carbones, ce qui confère à la bande (50) un ratio résistance mécanique/masse particulièrement intéressant.

En effet, lors d'un atterrissage, la roue d'avion (20) passe d'une vitesse de rotation nulle à une vitesse de rotation importante pouvant aller jusqu'à 500 rad/s, en une fraction de seconde seulement. Avec une telle accélération, un capteur ne pesant qu'une centaine de grammes génère une force centrifuge de plus de 600N, aussi la bande annulaire (50) doit être suffisamment résistante pour le retenir. Il convient de plus de prendre en compte un coefficient de sécurité minimal, aussi, la bande annulaire (50) doit pouvoir résister à une tension de 1500N.

Toutefois, dans un but d'économie de masse, cette bande (50) ne doit pas être trop lourde. C'est pourquoi d'autres matériaux peuvent être envisagés tel qu'un feuillard ou des câbles en acier, ou une sangle textile, tant que le ratio résistance mécanique/masse reste satisfaisant.

Lorsque la bande annulaire (50) est réalisée en carbone, ses dimensions sont généralement comprises entre 0.8mm à 2mm d'épaisseur en fonction du diamètre de la jante, et 5 à 40 mm de large, de préférence 1,6 mm d'épaisseur et 20 mm de large.

De préférence, lorsque la jante est en deux parties, la bande annulaire (50) est un manchon obtenu par tressage de fibres de carbone, et ensuite tronçonné à la largeur de bande (50) désirée. Il pourrait toutefois s'agir d'une bande dont les deux extrémités sont raboutées, par exemple au niveau d'une des coques, dans le cas d'une jante d'avion monobloc.

La bande annulaire (50) monobloc est de préférence déformable à la main par appui radial, pour que le dispositif (1) puisse être inséré manuellement dans le pneumatique avant montage sur la jante (21). Il n'est ainsi pas nécessaire d'utiliser d'outils tel qu'une presse pour monter le dispositif (1) dans le pneumatique de la roue (20).

Lors de son montage, un pneumatique d'avion a très peu de jeu entre la jante (21) et ses talons. De plus, un pneumatique d'avion est relativement rigide, de sorte que le montage du pneumatique sur la jante (21) est impossible si le dispositif (1) de contrôle de la pression était vissé ou maintenu sur la jante (21) préalablement : le pneumatique viendrait en butée contre le dispositif (1) et ne pourrait pas être monté sur la jante (21).

La figure 2 illustre qu'un contrepoids (60) peut être placé à l'opposé du système (40) de contrôle de la pression. Ce contrepoids est destiné à équilibrer le dispositif (1) de sorte qu'il n'y ait pas de vibrations lorsque la roue (20) tourne. Une façon simple d'équilibrer le dispositif (1) est de dimensionner le contrepoids (60) de sorte qu'il ait la même masse que le système (40), et monter le contrepoids (60) dans une deuxième coque (30) identique à la première.

Avantageusement, la bande (50) est fixée sur la ou les coques (30) grâce à des moyens (51). Cela permet bien sûr de garantir que les coques (30) ne s'échappent pas de la bande (50) lorsque le dispositif (1) est en utilisation. Mais cela permet aussi de garantir que l'éventuel contrepoids (60) reste bien diamétralement opposé au système (40) de contrôle de la pression, afin de maintenir l'équilibre dynamique du dispositif (1).

Ces moyens de fixation (51) sont par exemple un boulon serrant la bande (50) contre la coque (30). Les moyens (51) peuvent également être une vis coopérant avec un taraudage présent dans la coque (30), ou tout autre moyen adapté choisi le concepteur.

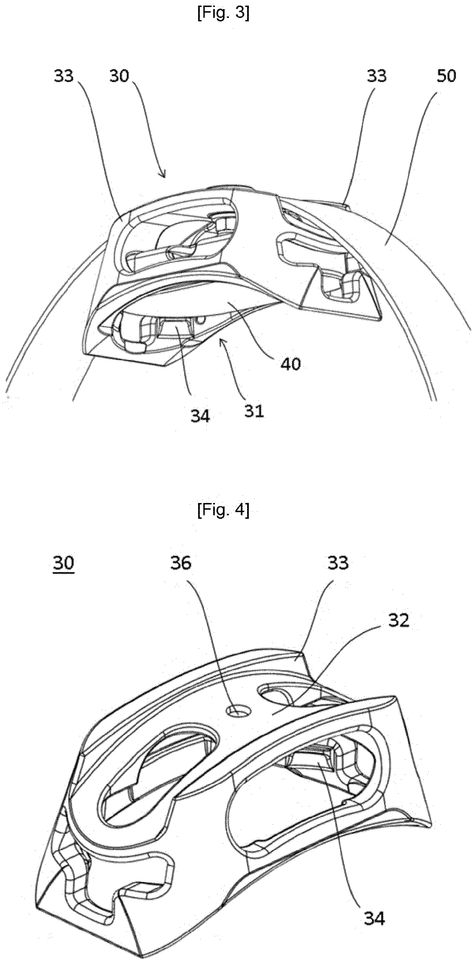

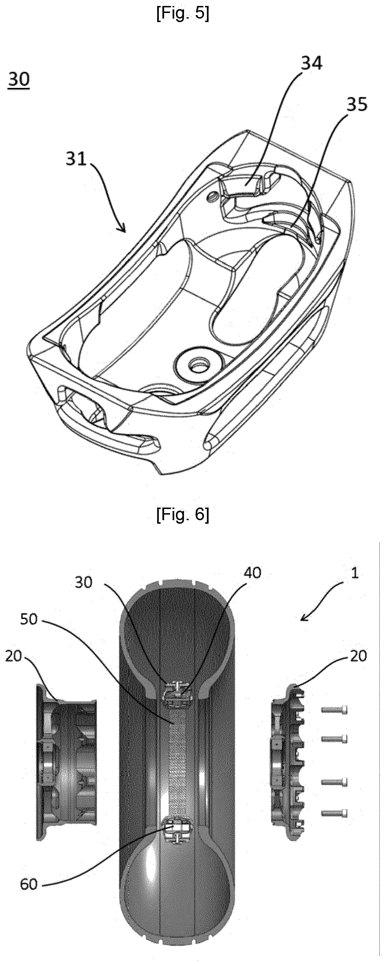

La figure 3 illustre le montage du dispositif (1) dans un mode de réalisation préféré. On y voit que le système (40) est inséré dans la coque (30) via un logement débouchant (31), et que le système (40) est maintenu en position grâce à des moyens d'encliquetage (34). Ces moyens d'encliquetage (34) présentent une rampe orientée du côté de l'ouverture du logement (31) et facilitant l'insertion du système (40). Le système (40) de contrôle de la pression est ensuite maintenu entre les faces d'arrêt des moyens d'encliquetage (34) et des butées (35) visibles sur la figure 5.

La figure 3 montre également que la bande annulaire (50) est positionnée au contact de la coque (30) et est guidée longitudinalement par des moyens de retenue transversale (33), qui sont dans ce mode de réalisation préféré deux parois longitudinales, parallèles, en saillie depuis une face d'appui (32) qui est illustrée figure 4, et contre laquelle est plaquée la bande annulaire (50).

Les figures 4 et 5 illustrent en détail la coque (30). La figure 4 présente la face d'appui (32) destinée à supporter la bande annulaire (50). On y voit que la face d'appui (32) est courbée et dépourvue d'angles vifs afin de prévenir toute usure prématurée ou déchirure de la bande annulaire (50).

On voit également les moyens de retenue transversale (33), ainsi qu'un orifice traversant (36) apte à recevoir le moyen de fixation (51) de la bande annulaire (50) sur la coque (30).

Les moyens de retenue transversale (33) et le moyen de fixation (51) permettent de garantir le bon maintien et le bon alignement le bande (50) sur la coque (30), afin que la coque (30) ne sorte pas de sous la bande (50), ni ne se déplace le long de celle-ci, que ce soit lors du montage du dispositif (1) sur la jante (21), ou lors d'un atterrissage par exemple.

La coque (30) est réalisée en tout matériau approprié, tel qu'en matériau polymère, par exemple du polyuréthane. Ce choix de matériau lui confère la souplesse nécessaire au bon fonctionnement des moyens d'encliquetage (34), et sa masse volumique est faible ce qui permet d'obtenir une coque (30) légère.

Dans un but de légèreté, il est également possible de ménager des ouvertures dans la coque (30), par exemple des ouvertures latérales, ou des ouvertures supérieures au niveau de la face d'appui (32).

La face inférieure de la coque (30) qui est en contact avec la jante (21) est courbe et de même rayon que la jante (21), afin d'épouser parfaitement la jante (21).

La figure 6 illustre un dispositif (1) monté dans le pneumatique de la roue (1), préalablement au montage de la jante (20) qui est ici en deux parties. On constate sur cette vue que le dispositif est volumineux, et que l'avantage conféré par une bande annulaire (50) déformable est évident. Si le dispositif devait être monté préalablement sur la jante, alors le montage du pneumatique sera très difficile voire impossible, compte tenu de sa rigidité.

Des patins non représentés peuvent être disposés entre la coque (30) et la jante (21), ou entre la bande annulaire (50) et la jante (21). Ces patins peuvent servir à éviter que le dispositif (1) ne patine sur la jante (21) lorsque la roue d'avion (20) accélère brusquement pendant un atterrissage. Ces patins peuvent également garantir que la jante (21) n'est pas rayée ni usée par la ou les coques (30), ou par la bande (50).

Par ailleurs, le dispositif (1) peut être conformé différemment des figures 1 à 5 sans sortir du cadre de l'invention, qui est défini par les revendications. En particulier, la coque (30) et la bande (50) peuvent être conformées différemment et peuvent être de tout type adapté à la présente application.

En outre, les caractéristiques techniques des différents modes de réalisation et variantes mentionnés ci-dessus peuvent être, en totalité ou pour certaines d'entre elles, combinées entre elles. Ainsi, le dispositif (1) peut être adapté en termes de coût, de fonctionnalités et de performance.

## Revendications

1. Dispositif (1) de contrôle de la pression d'un pneumatique d'une roue d'avion (20) munie d'une jante (21), ***caractérisé en* ce qu'**il comprend :
- une coque (30) définissant un logement débouchant (31) ;
- un système (40) de contrôle de la pression d'un pneumatique ;
- une bande annulaire (50) présentant une résistance à la traction comprise entre 400 et 1500N ;
le système (40) de contrôle de la pression étant reçu dans le logement (31) de la coque (30), et la bande annulaire (50) est positionnée sur une face d'appui (32) de la coque (30) opposée au logement débouchant (31) et à l'encontre de moyens de retenue transversale (33), le dispositif (1) est apte à être positionné autour de la jante (21) pour plaquer la coque (30) contre la jante (21) et obturer le logement débouchant (31).

2. Dispositif (1) selon la revendication 1 ***caractérisé en ce que*** le logement (31) présente des moyens d'encliquetage (34) du système (40) de contrôle de la pression.

3. Dispositif (1) selon la revendication 1, ***caractérisé en ce que*** la bande annulaire (50) est en fibre de carbone.

4. Dispositif (1) selon la revendication 1, ***caractérisé en ce que*** la bande annulaire (50) a une épaisseur comprise entre 0,8 et 2 mm et une largeur comprise entre 10 et 30 mm.

5. Dispositif (1) selon la revendication 1, ***caractérisé en ce que*** la bande annulaire (50) est fixée sur la coque (30).

6. Dispositif (1) selon la revendication 1, ***caractérisé en ce que*** les moyens de retenue transversale (33) se présentent sous la forme de parois latérales parallèles et en saillie de la face d'appui (32) de la coque (30).

7. Dispositif (1) selon la revendication 1, ***caractérisé en ce qu***'il comprend un contrepoids (60) diamétralement opposé au système (40) de contrôle de la pression de pneumatique.

8. Dispositif (1) selon la revendication 7 ***caractérisé en ce que*** le contrepoids (60) est maintenu par une deuxième coque, de préférence identique à la première, plaquée contre la jante (21) par la bande annulaire (50).

9. Dispositif (1) selon la revendication 1, ***caractérisé en ce que*** la bande annulaire (50) est déformable à la main par appui radial, lui permettant d'être insérée dans le pneumatique avant montage sur la jante (20).

10. Dispositif (1) selon la revendication 1, ***caractérisé en ce qu***'il comprend également des patins disposés entre la coque (30) et la jante (20) et/ou entre la bande (50) et la jante (20).

## Patentansprüche

1. Vorrichtung (1) zum Steuern des Drucks eines Reifens eines Flugzeugrads (20), das mit einer Felge (21) versehen ist, **dadurch gekennzeichnet, dass** sie umfasst:
- eine Schale (30), die ein offenes Gehäuse (31) definiert;
- ein System (40) zur Steuerung des Drucks eines Reifens;
- ein ringförmiges Band (50) mit einer Zugfestigkeit zwischen 400 und 1500 N;
wobei das Druckkontrollsystem (40) in dem offenen Gehäuse (31) der Schale (30) aufgenommen ist und das ringförmige Band (50) auf einer Auflagefläche (32) der Schale (30) gegenüber dem offenen Gehäuse (31) und gegen ein quer verlaufendes Haltemittel (33) positioniert ist, kann die Vorrichtung (1) um die Felge (21) herum positioniert werden, um die Schale (30) gegen die Felge (21) zu drücken und die offene Gehäuse (31) zu verschließen.

2. Vorrichtung (1) nach Anspruch 1, **dadurch gekennzeichnet, dass** das offene Gehäuse (31) Mittel (34) zum Einschnappen des Druckkontrollsystem (40) aufweist.

3. Vorrichtung (1) nach Anspruch 1, **dadurch gekennzeichnet, dass** das ringförmige Band (50) aus Kohlenstofffasern besteht.

4. Vorrichtung (1) nach Anspruch 1, **dadurch gekennzeichnet, dass** das ringförmige Band (50) eine Dicke zwischen 0,8 und 2 mm und eine Breite zwischen 10 und 30 mm aufweist.

5. Vorrichtung (1) nach Anspruch 1, **dadurch gekennzeichnet, dass** das ringförmige Band (50) an der Schale (30) befestigt is.

6. Vorrichtung (1) nach Anspruch 1, **dadurch gekennzeichnet, dass** die Querhaltemittel (33) als parallele Seitenwände ausgebildet sind, die von der Auflagefläche (32) die Schale (30) abstehen.

7. Vorrichtung (1) nach Anspruch 1, **dadurch gekennzeichnet, dass** sie ein Gegengewicht (60) aufweist, das dem Reifendruckkontrollsystem (40) diametral gegenüberliegt.

8. Vorrichtung (1) nach Anspruch 7, **dadurch gekennzeichnet, dass** das Gegengewicht (60) von einer zweiten Schale gehalten wird, die durch das Ringband (50) gegen die Felge (21) gedrückt wird.

9. Vorrichtung (1) nach Anspruch 1, **dadurch gekennzeichnet, dass** das ringförmige Band (50) durch radiale Abstützung von Hand verformbar ist, so dass es vor der Montage auf der Felge (21) in den Reifen eingeführt werden kann.

10. Vorrichtung (1) nach Anspruch 1, **dadurch gekennzeichnet, dass** sie auch Polster umfasst, die zwischen der Schale (30) und der Felge (20) und/oder zwischen dem Band (50) und der Felge (20) angeordnet sind.

## Claims

1. Device (1) for controlling the pressure of a tire of an aircraft wheel (20) provided with a rim (21), **characterized in that** it comprises:
- a shell (30) defining an open-ended housing (31);
- a system (40) for controlling the pressure of a tire;
- an annular band (50) having a tensile strength of between 400 and 1500N;
the pressure control system (40) being received in the open-ended housing (31) of the shell (30), and the annular band (50) is positioned on a bearing face (32) of the shell (30) opposite the open-ended housing (31) and against transverse retaining means (33), the device (1) is capable of being positioned around the rim (21) to press the shell (30) against the rim (21) and to close off the open-ended housing (31).

2. Device (1) according to claim 1 **characterized in that** the open-ended housing (31) has means (34) for snapping in the pressure control system (40).

3. Device (1) according to claim 1, **characterized in that** the annular band (50) is made of carbon fibers.

4. Device (1) according to claim 1, **characterized in that** the annular band (50) has a thickness between 0.8 and 2 mm and a width between 10 and 30 mm.

5. Device (1) according to claim 1, **characterized in that** the annular band (50) is fixed to the shell (30).

6. Device (1) according to claim 1, **characterized in that** the transverse retaining means (33) are in the form of parallel side walls projecting from the bearing face (32) of the shell (30).

7. Device (1) according to claim 1, **characterized in that** it comprises a counterweight (60) diametrically opposed to the tire pressure control system (40).

8. Device (1) according to claim 7, **characterized in that** the counterweight (60) is held by a second shell pressed against the rim (21) by the annular band (50).

9. Device (1) according to claim 1, **characterized in that** the annular band (50) is deformable by hand by radial support, allowing it to be inserted into the tire before mounting on the rim (21).

10. Device (1) according to claim 1, **characterized in that** it also comprises pads arranged between the shell (30) and the rim (20) and/or between the band (50) and the rim (20).
